# EUROPEAN PATENT APPLICATION

(11) **EP 3 276 067 A1**
(43) Date of publication of application: **31.01.2018**
(21) Application number: 16767778.0
(22) Date of filing: 25.03.2016
(51) Int. Cl.: D06F 37/22

(54) **WASHING MACHINE DAMPING MECHANISM AND WASHING MACHINE**

(30) Priority: 25.03.2015 CN 201510133405
(71) Applicant: Qingdao Haier Drum Washing Machine Co., Ltd., Qingdao, Shandong 266101 (CN)
(72) Inventor: CHI, Zongrui, Qingdao Shandong 266101 (CN); LUAN, Houli, Qingdao Shandong 266101 (CN); XIAO, Lei, Qingdao Shandong 266101 (CN); CHEN, Zhi, Qingdao Shandong 266101 (CN); WANG, Shan, Qingdao Shandong 266101 (CN)
(74) Representative: Bertsch, Florian Oliver
(86) International application number: PCT/CN2016/077387
(87) International publication number: WO 2016/150401

(57) **Abstract**

A vibration absorbing mechanism for a washing machine and a washing machine having the same are provided. The vibration absorbing mechanism includes a plurality of first vibration absorbers (2) for supporting an outer drum (1) of the washing machine. A second vibration absorber (3) is connected between at least two of the first vibration absorbers (2). Based on the existing first vibration absorbers (2), the second vibration absorber (3) connected with two first vibration absorbers (2) is additionally provided on the vibration absorbing mechanism. Through the second vibration absorber (3), an amplitude of the outer drum (1) of the washing machine is inhibited to effectively limit vibration in up-down direction and left-right direction of entire washing machine. Therefore, the volume of a counterweight is effectively reduced, so that the structure of the washing machine is more compact while achieving better vibration absorbing and noise reduction effects.

## Description

### TECHNICAL FIELD

The present disclosure relates to the technical field of washing machines, for example, relates to a vibration absorbing mechanism for a washing machine and a washing machine having the vibration absorbing mechanism.

### BACKGROUND

A washing machine needs to be provided with a vibration absorbing system to absorb vibration generated by a drum body of the washing machine. The vibration absorbing system of the washing machine generally adopts a combination of friction type vibration absorbers, a hanging spring and a counterweight, or adopts a combination of oil pressure type vibration absorbers, a hanging spring and a counterweight. Since each of the vibration absorbers is connected with an outer drum of the washing machine respectively and no force is applied between the vibration absorbers, the vibration absorbing effect of the outer drum of the washing machine is poor. Therefore, a counterweight with a large volume is needed to realize balance. In this way, the counterweight occupies most volume of the drum body, causing a series of problems, for example, the entire design is incompact, the washing capacity is little, the entire vibration is bad, there is a high strength requirement for the entire housing, and the like.

In view of the above, it is required to provide a new vibration absorbing mechanism for a washing machine and a washing machine having the same, so as to solve the problems existed in the vibration absorbing mechanism, such as poor vibration absorbing effect, large counterweight of the washing machine and incompact structure.

### SUMMARY

Embodiments of the present disclosure propose a vibration absorbing mechanism for a washing machine, so as to achieve a good vibration absorbing effect, enable the washing machine to have a compact structure and increase a volume of the washing machine effectively.

Embodiments of the present disclosure further propose a washing machine having good vibration absorbing effect, low noise, large volume, light weight and compact structure.

Embodiments of the present disclosure propose a vibration absorbing mechanism for a washing machine. The vibration absorbing mechanism includes a plurality of first vibration absorbers for supporting an outer drum of the washing machine. A second vibration absorber is connected between at least two of the first vibration absorbers.

Each of the first vibration absorbers has a lower end connected with a housing of the washing machine, and an upper end connected with the outer drum of the washing machine.

Each end of the second vibration absorber is connected with one of the first vibration absorbers respectively.

Both ends of the second vibration absorber are connected with the first vibration absorber through a connector rotatably connected with the second vibration absorber.

The connector includes a sleeve sheathed on the first vibration absorber and a connecting rod fixedly connected with side walls of the sleeve. A free end of the connecting rod is rotatably connected with the second vibration absorber.

The sleeve is configured to be rotatable around an axis of the first vibration absorber and is prevented from moving along the axis of the the first vibration absorbers through a positioning ring.

The connecting rod is configured to be perpendicular to the axis of the sleeve.

The connector may be made of polyformaldehyde material. Lubricating oil may be coated between the sleeve and the first vibration absorbers.

Each of the first vibration absorbers is an oil pressure type vibration absorber including an outer housing, an inner housing and a piston which is movable in the inner housing. The second vibration absorber may be connected with the outer housing of the first vibration absorber.

The second vibration absorber is a friction type vibration absorber.

A front part and a rear part of the outer drum of the washing machine may be provided with a pair of first vibration absorbers respectively. The second vibration absorber is connected between a pair of first vibration absorbers at the front part of the outer drum of the washing machine.

In another aspect, embodiments of the present disclosure propose a washing machine including the above vibration absorbing mechanism for a washing machine.

Embodiments of the present disclosure have the following beneficial effects:

In the vibration absorbing mechanism for the washing machine provided by embodiments of the present disclosure, a second vibration absorber connected with two first vibration absorbers is additionally provided based on the existing first vibration absorbers. Through the second vibration absorber, the amplitude of the outer drum of the washing machine is inhibited to effectively limit vibration in up-down direction and left-right direction of the entire washing machine. Accordingly, the volume of the counterweight is effectively reduced, so that the structure of the washing machine is more compact while achieving better vibration absorbing and noise reduction effects.

The washing machine provided by embodiments of the present disclosure adopts the above vibration absorbing mechanism, thereby realizing good vibration absorbing effect, low noise, large volume, light weight and more compact structure.

### BRIEF DESCRIPTION OF DRAWINGS

FIG. 1 is a perspective diagram illustrating a connecting structure between an outer drum of a washing machine and a vibration absorbing mechanism provided by embodiment I of the present disclosure;
FIG. 2 is a front view illustrating a connecting structure between an outer drum of a washing machine and a vibration absorbing mechanism provided by embodiment I of the present disclosure;
FIG. 3 is a schematic diagram illustrating a connecting structure between a connector and a first vibration absorber provided by embodiment I of the present disclosure;
FIG. 4 is a schematic diagram I illustrating a vibration absorbing mechanism provided by embodiment I of the present disclosure;
FIG. 5 is a schematic diagram II illustrating a vibration absorbing mechanism provided by embodiment I of the present disclosure; and
FIG. 6 is a schematic diagram III illustrating a vibration absorbing mechanism provided by embodiment I of the present disclosure.

### List of Reference Numerals

1. outer drum; 2. first vibration absorber; 21. outer housing; 22. inner housing; 3. second vibration absorber; 4. connector; 41. sleeve; 42. connecting rod; and 43. positioning ring.

### DETAILED DESCRIPTION

Embodiments of the present disclosure will be described below in combination with the drawings.

Embodiments of the present disclosure provide a vibration absorbing mechanism for a washing machine. The vibration absorbing mechanism includes a plurality of first vibration absorbers for supporting an outer drum of the washing machine. A second vibration absorber is connected between at least two of the plurality of first vibration absorbers. Through the second vibration absorber, the amplitude of the outer drum of the washing machine is inhibited to effectively limit vibrations of the entire washing machine in up-down direction and left-right direction. Accordingly, the volume of the counterweight is effectively reduced, so that the structure of the washing machine is more compact while achieving better vibration absorbing and noise reduction effects.

### Embodiment I

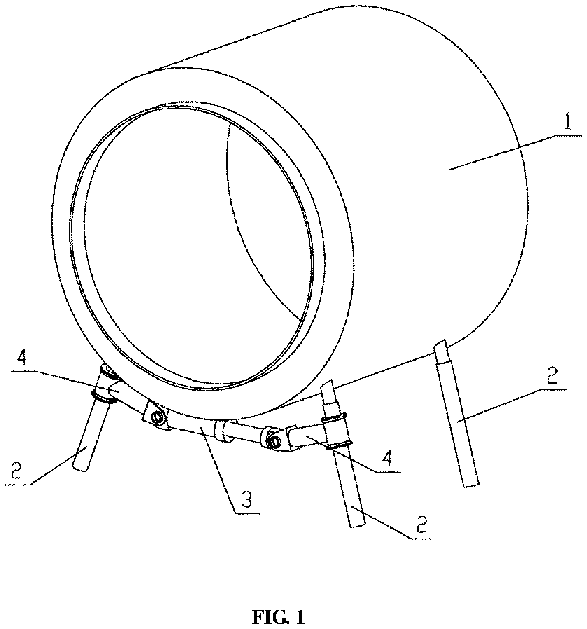

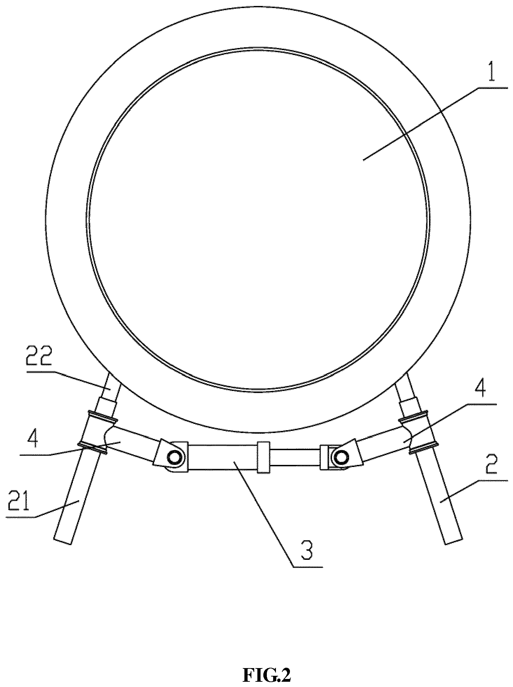

The vibration absorbing mechanism is described by taking a drum washing machine as an example in the present embodiment. As shown in FIG. 1 to FIG. 3, the vibration absorbing mechanism includes two pairs of first vibration absorbers 2 (i.e., there are four first vibration absorbers 2 in total) located at a front part and a rear part of an outer drum 1 of the washing machine respectively. The first vibration absorbers 2 are arranged on both sides of a bottom of an outer drum 1. A second vibration absorber 3 is connected between the two first vibration absorbers 2 located at the front part.

Each of the first vibration absorbers 2 has a lower end connected with a housing of the washing machine, and an upper end connected with the outer drum 1. Both ends of the second vibration absorber 3 are connected with the first vibration absorbers 2 through a connector 4. The connector 4 includes a sleeve 41 sheathed on the first vibration absorber 2 and a connecting rod 42 fixedly connected with side walls of the sleeve 41. A Free end of the connecting rod 42 is rotatably connected with the second vibration absorber 3. The free end of the connecting rod 42 may be connected with the second vibration absorber 3 through a hinge. Both ends of the sleeve 41 are limited through a positioning ring 43.

The sleeve 41 is in clearance fit with the first vibration absorber 2, so that the sleeve 41 can rotate around the axis of the first vibration absorber 2. The positioning ring 43 is used to prevent the sleeve 41 from moving along an axial direction of the first vibration absorber 2, thereby increasing flexibility of the connector 4 and enhancing the vibration absorbing effect.

The connecting rod 42 may be configured to be perpendicular to the axis of the sleeve 41, so that the connecting rod 42 can rotate around the first vibration absorber 2 in a motion process but always keeps perpendicular to the first vibration absorber 2.

The connector 4 may be made of polyformaldehyde material. Polyformaldehyde is a thermoplastic crystalline polymer, is honored as "super steel", and has very high strength and rigidity, good elasticity and abrasion resistance and good mechanical property. Therefore, the connector 4 may adopt the polyformaldehyde, so as to increase the vibration abosorbing effect of the vibration absorbing mechanism, realize a reliable structure and prolong the service life.

Lubricating oil may be coated between the sleeve 41 and the first vibration absorber 2, so as to reduce rotational resistance of the sleeve 41.

The first vibration absorbers 2 and the second vibration absorber 3 may be dampers, or a combination of dampers and springs. In the present embodiment, the first vibration absorber 2 may adopt an oil pressure type vibration absorber including an outer housing 21, an inner housing 22 and a piston which is movable in the inner housing 22. The second vibration absorber 3 may adopt a friction type vibration absorber. The second vibration absorber 3 is connected to the outer housing 21 of the first vibration absorber 2 through the connector 4, so that vibration absorbing effects of the first vibration absorber 2 and the second vibration absorber 3 do not interact with each other. By additionally providing the friction type vibration absorber, vibrating energy can be converted into friction of the friction type vibration absorber during operation of the washing machine. In this way, vibration and noise of the entire machine are reduced. Meanwhile, strength requirements of the housing of the entire machine and the volume of the counterweight are reduced, a gap between the outer drum 1 and the housing is reduced, and such space is used for the volume of the outer drum 1. Therefore, the volume is increased, the weight and cost are reduced.

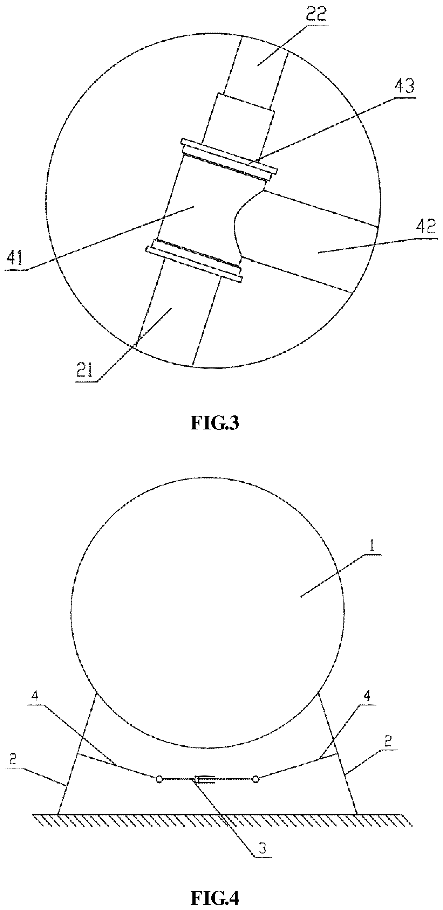

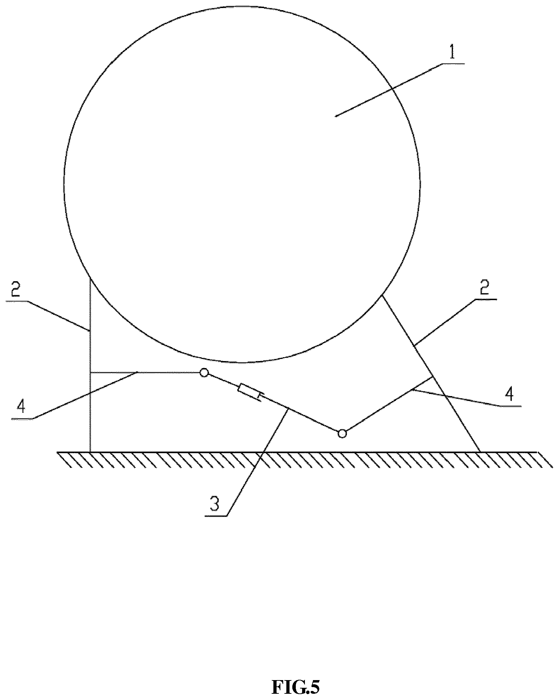

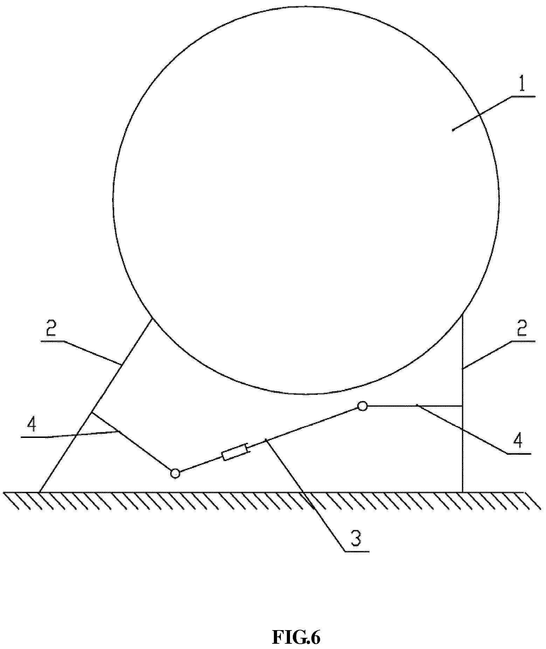

FIG. 4 is a schematic diagram illustrating a state of a vibration absorbing mechanism when an outer drum 1 of a washing machine is in a normal state. At this moment, the second vibration absorber 3 is in a horizontal state. As shown in FIG. 5, when the outer drum 1 is deviated to a left side, under the action of the first vibration absorbers 2, the second vibration absorber 3 is rotated clockwise and stretched. On the other hand, the second vibration absorber 3 also performs a restriction action on the first vibration absorbers 2, thereby limiting the amplitude of the outer drum 1 and inhibiting up-down and left-right vibration of the outer drum 1. Similarly, as shown in FIG. 6, when the outer drum 1 is deviated to a right side, under the action of the first vibration absorbers 2, the second vibration absorber 3 is rotated anticlockwise and stretched. On the other hand, the second vibration absorber 3 also performs a restriction action on the first vibration absorbers 2, thereby limiting the amplitude of the outer drum 1 and inhibiting up-down and left-right vibration of the outer drum 1.

The vibration absorbing mechanism is not limited to arrange one pair of first vibration absorbers 2 at the front part and the rear part of the outer drum 1 respectively, and is also not limited to only arrange the second vibration absorber 3 between two first vibration absorbers 2 at the front part. The vibration absorbing mechanism may be configured according to vibration absorbing requirements of the washing machine as long as the vibration absorbing effect can be increased by additionally providing the second vibration absorber 3. The vibration absorbing mechanism is also not limited to being applied to a drum washing machine, and can also be applied to an impeller washing machine. The structures are similar and are not repeated herein.

### Embodiment II

The present embodiment provides a washing machine having the vibration absorbing mechanism provided in embodiment I. The washing machine has good vibration absorbing effect, low noise, large volume, light weight and more compact structure.

Technical solutions of the present disclosure are described above in combination with embodiments. These descriptions are not interpreted as limitations to a protection scope of the present disclosure. Based on explanation herein, those skilled in the art can contemplate other embodiments of the present disclosure without contributing creative labor. These embodiments shall fall into the protection scope of the present disclosure.

### INDUSTRIAL APPLICABILITY

The present disclosure provides a vibration absorbing mechanism for a washing machine and a washing machine having the vibration absorbing mechanism. The vibration absorbing mechanism for the washing machine includes a plurality of first vibration absorbers for supporting the outer drum of the washing machine. The second vibration absorber is connected between at least two of the first vibration absorbers. In the vibration absorbing mechanism for the washing machine, based on the existing first vibration absorbers, a second vibration absorber connected with two of the first vibration absorbers is additionally provided. Through the second vibration absorber, the amplitude of the outer drum of the washing machine is inhibited to effectively limit vibration of the entire washing machine in up-down direction and left-right direction. Therefore, the volume of the counterweight is effectively reduced, so that the structure of the washing machine is more compact while achieving better vibration absorbing and noise reduction effects.

## Claims

1. A vibration absorbing mechanism for a washing machine, comprising a plurality of first vibration absorbers (2) for supporting an outer drum of the washing machine, wherein a second vibration absorber (3) is connected between at least two of the plurality of first vibration absorbers (2).

2. The vibration absorbing mechanism for the washing machine according to claim 1, wherein each of the first vibration absorbers (2) has a lower end connected with a housing of the washing machine, and an upper end connected with the outer drum of the washing machine; and
each end of the second vibration absorber (3) is connected with one of the first vibration absorbers (2).

3. The vibration absorbing mechanism for the washing machine according to claim 2, wherein each end of the second vibration absorber (3) is connected with one of the first vibration absorbers (2) through a connector (4), and the connector (4) is rotatably connected with the second vibration absorber (3).

4. The vibration absorbing mechanism for the washing machine according to claim 3, wherein the connector (4) comprises a sleeve (41) sheathed on the first vibration absorber (2), and a connecting rod (42) fixedly connected with side walls of the sleeve (41), wherein a free end of the connecting rod (42) is rotatably connected with the second vibration absorber (3); and
the sleeve (41) is configured to be rotatable around an axis of the first vibration absorber (2), and is prevented from moving along the axis of the first vibration absorber (2) through a positioning ring (43).

5. The vibration absorbing mechanism for the washing machine according to claim 4, wherein the connecting rod (42) is perpendicular to an axis of the sleeve (41).

6. The vibration absorbing mechanism for the washing machine according to claim 4, wherein the connector (42) is made from polyformaldehyde material, and lubricating oil is coated between the sleeve (41) and the first vibration absorbers (2).

7. The vibration absorbing mechanism for the washing machine according to any one of claims 1-6, wherein each of the plurality of first vibration absorbers (2) is an oil pressure type vibration absorber comprising an outer housing (21), an inner housing (22) and a piston movable in the inner housing (22), wherein the second vibration absorber (3) is connected with the outer housing (21) of the first vibration absorber; and
the second vibration absorber (3) is a friction type vibration absorber.

8. The vibration absorbing mechanism for the washing machine according to any one of claims 1-6, wherein a front part and a rear part of the outer drum of the washing machine are provided with a pair of first vibration absorbers (2) respectively, and the second vibration absorber (3) is connected between the pair of first vibration absorbers (2) at the front part of the outer drum of the washing machine.

9. A washing machine, comprising the vibration absorbing mechanism for the washing machine according to anyone of claims 1-8.
